# EUROPÄISCHE PATENTSCHRIFT

(11) **EP 3 572 605 B1**
(45) Veröffentlichungstag und Bekanntmachung des Hinweises auf die Patenterteilung: **26.06.2024**
(21) Anmeldenummer: 19186609.4
(22) Anmeldetag: 06.11.2017
(51) Int. Cl.: E05D 5/02

(54) **SCHALTSCHRANKGEHÄUSE MIT EINEM ÜBER EINE SCHARNIERANORDNUNG BEFESTIGTEN TÜRELEMENT**
SWITCHGEAR CABINET HOUSING WITH A DOOR ELEMENT ATTACHED BY MEANS OF A HINGE ARRANGEMENT
BOÎTIER D'ARMOIRE DE DISTRIBUTION AVEC UN ÉLÉMENT DE PORTE FIXÉ PAR UN AGENCEMENT DE CHARNIÈRES

(30) Priorität: 01.12.2016 DE 102016123230
(43) Veröffentlichungstag der Anmeldung: 27.11.2019
(62) Teilanmeldung aus: 17801335.5
(73) Patentinhaber: Rittal GmbH & Co. KG, 35745 Herborn (DE)
(72) Erfinder: SCHÖNDORF, Nora, 35713 Eschenburg (DE); BLOH, Achim, 35644 Hohenahr (DE); REUTER, Wolfgang, 56479 Liebenscheid (DE)
(74) Vertreter: Angerhausen, Christoph

(56) Entgegenhaltungen:
- EP-A1- 0 223 871
- EP-B1- 1 777 363
- DE-C1- 3 340 491

## Beschreibung

Die Erfindung geht aus von einem Schaltschrankgehäuse mit den Merkmalen des Oberbegriffs des Patentanspruchs 1. Ein derartiges Schaltschrankgehäuse ist aus der EP 0 223 871 B2 bekannt. Ein ähnliches Schaltschrankgehäuse beschreibt auch die DE 3 340 491 C1.

Die EP 1 777 363 B1 offenbart eine Scharnieranordnung für ein Schaltschrankgehäuse, mit einer ersten Scharnierhälfte, die an einer eine Türöffnung begrenzenden vertikalen Seitenwand eines Schaltschrankgehäuses oder an einem die Türöffnung begrenzenden Vertikalprofil eines Rahmengestells eines Schaltschrankgehäuses befestigt ist, und mit einer zweiten Scharnierhälfte, die an einem Türelement befestigt ist, wobei die Scharnierhälften über eine Drehachse zueinander verschwenkbar miteinander verbunden sind, so dass in einer Schließstellung das Türelement die Türöffnung verschließt und in einer Offenstellung vorzugsweise vollständig freigibt, und wobei die Drehachse außerhalb eines Außenumfangs sowohl der Türöffnung als auch des Türelements angeordnet ist.

Durch die Verlagerung der Drehachse nach außerhalb des Außenumfangs von sowohl dem Schaltschrankgehäuse als auch dem Türelement wird ein sogenanntes 180°-Scharnier erreicht, welches es ermöglicht, das Türelement aus seiner Schließposition um zumindest 180° in eine Offenstellung zu verschwenken. Die bisher bekannten Scharnieranordnungen haben den Nachteil, dass für ihre Montage entweder das Schaltschrankgehäuse oder das Türelement nachgearbeitet werden muss. Beispielsweise müssen spezielle Ausschnitte zur Durchführung der Drehachsen oder Bohrungen für die Befestigung der Scharnierhälften bereitgestellt werden, ohne die eine Montage der bekannten Scharnieranordnungen am Schaltschrankgehäuse beziehungsweise am Türelement nicht möglich ist.

Es ist daher die Aufgabe der Erfindung, ein gattungsgemäßes Schaltschrankgehäuse vorzuschlagen, das keine Nachbearbeitung des Schaltschrankgehäuses oder des Türelements erfordert und damit die im Wesentlichen werkzeuglose Montage der Scharnieranordnung ermöglicht.

Diese Aufgabe wird durch ein Schaltschrankgehäuse mit den Merkmalen des Anspruchs 1 gelöst. Vorteilhafte Ausführungsformen sind jeweils Gegenstand der abhängigen Ansprüche.

Demgemäß ist vorgesehen, dass die Nut L-förmig ausgebildet ist, mit einem ersten Nutabschnitt zwischen dem Verbindungssteg und einer jeweiligen ersten Anlageseite der Lagerteile und mit einem zweiten Nutabschnitt zwischen der Scharnierbolzenhülse und einer jeweiligen zweiten Anlageseite der Lagerteile.

Über die Nut kann die betreffende Scharnierhälfte auf einen Vorsprung an dem Außenumfang des der Scharnierhälfte zugeordneten Teils von Schaltschrankgehäuse und Türelement aufgesteckt werden. Dazu kann beispielsweise zwischen dem Vorsprung und der Nut eine Clip-Verbindung ausgebildet sein, so dass die Scharnierhälfte durch ein "Aufclipsen" auf dem Schaltschrankgehäuse bzw. dem Türelement montiert werden kann.

Durch das Aufstecken der Scharnierhälfte über die Nut auf den Vorsprung kann zumindest eine Vormontage der Scharnierhälfte auf dem den Vorsprung aufweisenden Bauteil, das heißt entweder auf dem Schaltschrankgehäuse oder dem Türelement, erreicht werden. Die Vormontage kann beispielsweise insoweit erfolgen, dass Befestigungsmittel, für die kraftschlüssige Verbindung von Schaltschrankgehäuse beziehungsweise Türelement und Scharnierhälfte für eine anschließende kraftschlüssige Verbindung vorpositioniert sind. Beispielsweise können dazu Befestigungsaufnahmen, beispielsweise Befestigungsdurchlässe oder Bohrungen von Scharnierhälfte und Schaltschrankgehäuse bzw. Türelement fluchtend zueinander angeordnet werden, so dass für die endgültige kraftschlüssige Verriegelung beider Komponenten miteinander lediglich noch ein Befestigungsmittel, beispielsweise ein Arretierbolzen werkzeuglos eingesteckt werden kann.

Der Vorsprung kann sich parallel zu der Drehachse und, zumindest dann, wenn das Türelement die Türöffnung verschließt, senkrecht zu der Türöffnungsebene erstrecken, mithin aus der Türöffnungsebene herausstehen. Der Vorsprung kann insbesondere eine, gegebenenfalls umlaufend geschlossene, 90°-Umkantung an dem Außenumfang des Türelements sein. Der Vorsprung kann auch ein vorstehender Steg oder ein umlaufender Flansch sein.

Weiterhin kann das Schaltschrankgehäuse an der Türöffnung ein U-Profil mit zwei parallelen oder im Wesentlichen parallelen Profilseiten aufweisen, das über eine sich senkrecht zu diesen erstreckende weitere Profilseite miteinander verbunden ist, wobei das U-Profil über eine erste der im Wesentlichen parallelen Profilseiten und eine weitere 90°-Umkantung an die weitere Seitenwand anprofiliert ist, und wobei die zweite der parallelen Profilseiten eine Dichtseite ist, die an einem an einem Türelement innenseitig angeordneten Dichtelement anliegt, wenn sich das Türelement in seiner Schließstellung befindet.

Dabei kann sich das erste Scharnierelement zwischen den beiden parallelen Profilseiten erstrecken und an der an die Seitenwand anprofilierten Profilseite befestigt sein.

Weiterhin kann die zweite Scharnierhälfte zwei Lagerteile mit jeweils einer ersten Durchgangsbohrung zur Aufnahme der Drehachse, eine sich dazu parallel erstreckende zweite Durchgangsbohrung zur Aufnahme des Befestigungsmittels und eine sich ebenfalls parallel dazu erstreckende in Drehachsenrichtung durchgehende Teilnut aufweisen, wobei die beiden Lagerteile über einen Verbindungssteg unter einem Abstand zueinander und mit sowohl fluchtenden ersten und zweiten Durchgangsbohrungen als auch fluchtenden Teilnuten miteinander verbunden sind.

Dabei kann weiterhin vorgesehen sein, dass der Verbindungssteg eine Anlageseite aufweist, die mit jeweils einer Begrenzungsseite der beiden Teilnuten fluchtet, so dass die Anlageseite des Verbindungssteges mit den Begrenzungsseiten der Teilnuten eine in Drehachsenrichtung durchgehende Nutbegrenzungswand der Nut der zweiten Scharnierhälfte bilden. Die beiden Begrenzungsseiten der beiden Teilnuten können insbesondere eine der beiden von zwei gegenüberliegenden und im Wesentlichen parallel beabstandeten, seitlichen, das heißt sich in Tiefenrichtung der Nut erstreckende Seitenwände der Teilnuten sein.

Die Nut der zweiten Scharnierhälfte kann an ihrer der durchgehenden Nutbegrenzungswand gegenüber liegenden Seite im Bereich zwischen den beiden Lagerteilen unterbrochen sein.

Weiterhin kann die zweite Scharnierhälfte zwei Lagerteile mit jeweils einer ersten Durchgangsbohrung zur Aufnahme des Verbindungsbolzens und eine sich zu den Durchgangsbohrungen parallel erstreckende Scharnierbolzenhülse zur Aufnahme der Drehachse aufweisen, wobei die beiden Lagerteile über einen Verbindungssteg unter einem Abstand zueinander mit fluchtenden ersten Durchgangsbohrungen und mit der Scharnierbolzenhülse verbunden sind, und wobei zwischen den Lagerteilen und dem Verbindungssteg die Nut ausgebildet ist.

Die Nut ist L-förmig ausgebildet, mit einem ersten Nutabschnitt zwischen dem Verbindungssteg und einer jeweiligen ersten Anlageseite der Lagerteile und mit einem zweiten Nutabschnitt zwischen der Scharnierbolzenhülse und einer jeweiligen zweiten Anlageseite der Lagerteile.

Je Lagerteil können die erste und die zweite Anlageseite senkrecht zueinander ausgerichtet sein und über einen ersten Rundabschnitt ineinander übergehen.

Der Verbindungssteg kann sich senkrecht zu einer weiteren Anlageseite der Scharnierbolzenhülse erstrecken, wobei die weitere Anlageseite parallel beabstandet zu den zweiten Anlageseiten angeordnet ist, sodass der zweite Nutabschnitt gebildet ist, wobei der Verbindungssteg über einen zweiten Rundabschnitt in die weitere Anlageseite übergeht, und wobei der Radius des ersten Rundabschnitts größer als der Radius des zweiten Rundabschnitts ist.

Die Scharnieranordnung kann insbesondere bei Großschränken, die ein Rahmengestell aufweisen, weiterhin ein Vertikalprofil des Rahmengestells eines Schaltschrankgehäuses aufweisen, wobei das Vertikalprofil im Querschnitt zwei senkrecht zueinander ausgerichtete Dichtstege aufweist, die über eine gegenüber Dichtkanten der beiden Dichtstege zurückversetzte Verbindungsprofilseite miteinander verbunden sind, wobei die erste Scharnierhälfte über die Verbindungsprofilseite an dem Vertikalprofil festgelegt ist.

Die erste Scharnierhälfte kann über einen Befestigungsflansch an der Verbindungsprofilseite festgelegt sein, an den ein L-förmiger Profilsabschnitt mit einem ersten Profilsteg unter einem 45°-Winkel angeformt ist, wobei der erste Profilsteg über einen 90°-Übergang in einen zweiten Profilsteg übergeht, an dessen freiem Ende ein Scharnierbolzensitz in der Drehachse angeordnet ist.

Weitere Einzelheiten der Erfindung werden anhand der nachstehenden Figuren erläutert. Dabei zeigt:
- Figur 1: eine perspektivische Ansicht eines nicht zur Erfindung gehörenden Schaltschrankgehäuses, bei der sich das Türelement in einer um 180° geöffneten Stellposition befindet;
- Figur 2: eine Detailansicht auf die Scharnieranordnung des Schaltschrankgehäuses nach Figur 1;
- Figur 3: eine Draufsicht auf die Türseite des Schaltschrankgehäuses nach Figur 1 mit geöffneter Tür;
- Figur 4: eine Querschnittsansicht entlang des in Figur 3 eingezeichneten Schnittes B-B;
- Figur 5: eine Draufsicht auf die Türseite eines nicht zur Erfindung gehörenden Schaltschrankgehäuses mit geschlossenem Türelement;
- Figur 6: eine Querschnittsansicht entlang des in Figur 5 eingezeichneten Schnittes A-A;
- Figur 7: eine perspektivische Ansicht eines nicht zur Erfindung gehörenden Schaltschrankgehäuses mit geschlossenem Türelement;
- Figur 8: eine Detailansicht des Schaltschrankgehäuses gemäß Figur 7 im Bereich der Scharnieranordnung in perspektivischer Darstellung;
- Figur 9: eine bespielhafte Ausführungsform einer nicht zur Erfindung gehörenden zweiten Scharnierhälfte;
- Figur 10: eine bespielhafte Ausführungsform einer nicht zur Erfindung gehörenden ersten Scharnierhälfte;
- Figuren 11a-11d: verschiedene perspektivische Ansichten einer nicht zur Erfindung gehörenden Scharnieranordnung, die aus den in den Figuren 9 und 10 gezeigten Scharnierhälften zusammengesetzt sind;
- Figur 12: eine erfindungsgemäße Ausführungsform einer Scharnieranordnung in der Offenstellung und in perspektivischer Darstellung;
- Figur 13: die Scharnieranordnung gemäß Figur 12 in der Draufsicht sowie mit entnommenem Türelement;
- Figur 14: die Scharnieranordnung gemäß Figur 12 in einer Explosionsdarstellung;
- Figur 15: eine weitere erfindungsgemäße Ausführungsform einer Scharnieranordnung in der Schließstellung und im Horizontalquerschnitt; und
- Figur 16: die Scharnieranordnung gemäß Figur 15 in der Offenstellung und wiederum im Horizontalquerschnitt.

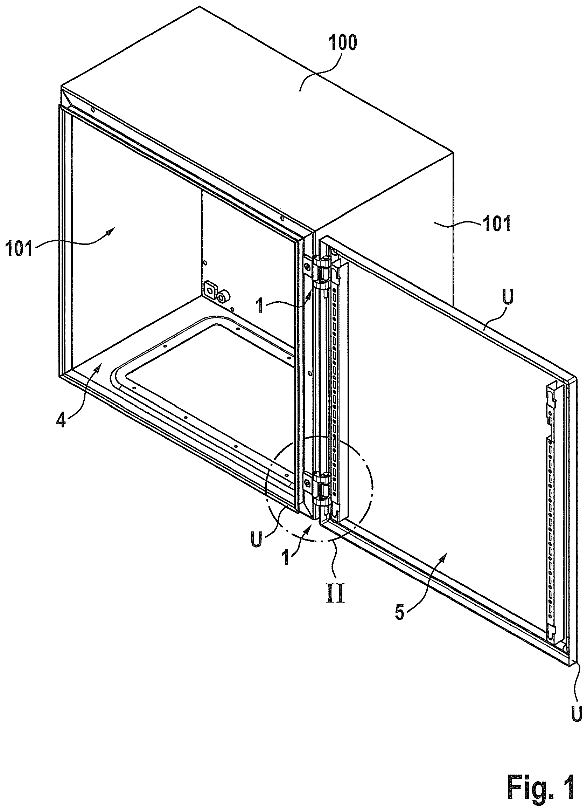

Figur 1 zeigt ein nicht zur Erfindung gehörendes Schaltschrankgehäuse 100, bei dem sich das Türelement 5 in einer um 180° gegenüber der Schließstellung verschwenkten Offenstellung befindet. Das Türelement 5 ist über zwei Scharnieranordnungen 1, die die Außenumfänge U von Türelement 5 und Schaltschrankgehäuse 100 miteinander verbinden, an dem Schaltschrankgehäuse 100 drehbar befestigt.

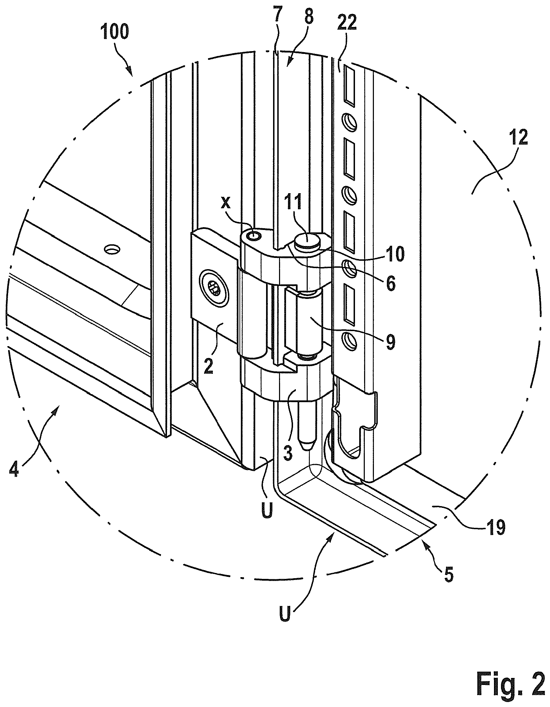

Die in der Darstellung gemäß Figur 1 untere Scharnieranordnung 1 ist in Figur 2 im Detail gezeigt. Demgemäß weist die Scharnieranordnung 1 eine erste Scharnierhälfte 2 auf, die am Außenumfang U des Schaltschrankgehäuses 100 über einen Bolzen festgelegt ist. Eine zweite Scharnierhälfte 3 ist über einen Vorsprung 7 am Außenumfang U des Türelements 5 aufgeclipst und über einen Verbindungsbolzen 11 an dem Türelement arretiert. Der Verbindungsbolzen 11 ist durch als Durchgangsbohrungen durch die zweite Scharnierhälfte 3 ausgebildete Befestigungsmittel 10 sowie ein türseitiges Befestigungsmittel 9, das eine am Außenumfang U des Türelements 5 aufgeschweißte Öse ist, hindurchgeführt.

An der Türinnenseite 12 des Türelements 5 ist ein Türrohrrahmen 22 angeordnet. Die Drehachse x ist von einem Dreh- oder Scharnierbolzen gebildet, welcher die beiden Scharnierhälften 2, 3 verschwenkbar zueinander miteinander verbindet.

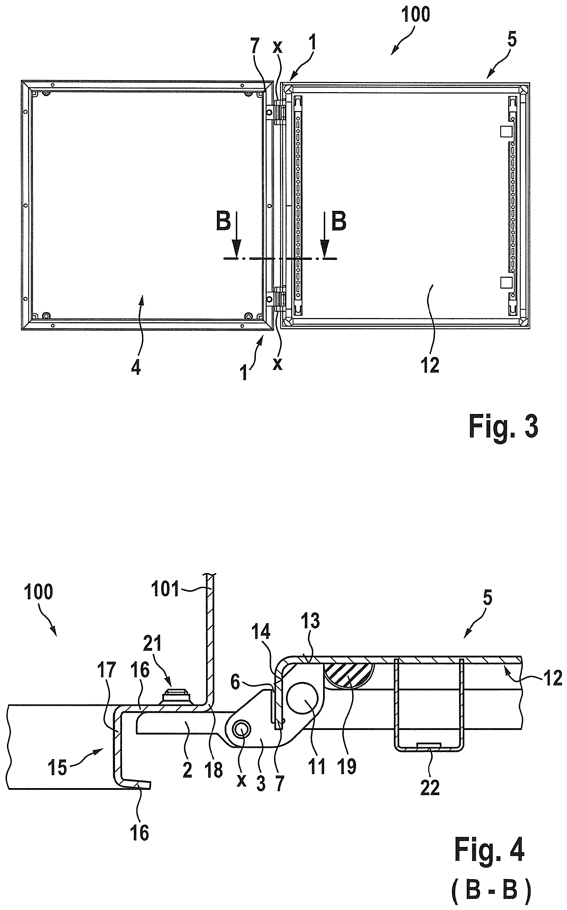

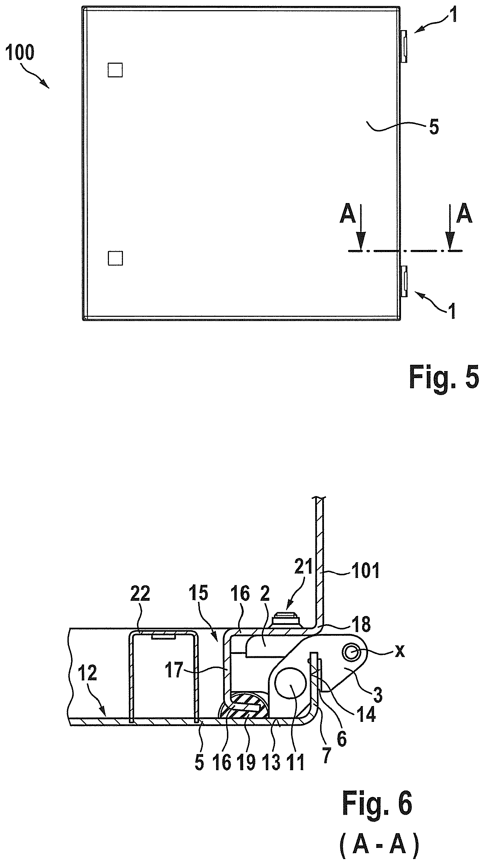

Der Aufbau der in den vorangegangenen Figuren gezeigten Scharnieranordnung 1 ist in den Figuren 3 und 4 weiter erläutert. In der in den Figuren 3 und 4 gezeigten Offenstellung des Türelements 5 ist zu erkennen, dass das Schaltschrankgehäuse 100 ein an seiner Seitenwand 101 anprofiliertes U-Profil 15 aufweist mit zwei im Wesentlichen parallelen Profilseiten 16, die unter einem Abstand zueinander über eine zu diesen senkrecht stehende weitere Profilseite 17 miteinander verbunden sind. In einen zwischen den im Wesentlichen parallelen Profilseiten 16 gebildeten Aufnahmeraum ragt die erste Scharnierhälfte 2 hinein und ist über eine Schraubverbindung mit der über eine 90°-Umkantung in die Seitenwand 101 übergehenden Profilseite 16 verschraubt. Die gegenüberliegende, freie Profilseite 16 bildet eine Dichtebene, die in der geschlossenen Stellung (vgl. Figur 6) an dem Dichtelement 19 zur Anlage kommt und somit in der Schließposition des Türelements 5 den Innenraum des Schaltschrankgehäuses 100 gegenüber der Umgebung abdichtet. Der Vorsprung 7 ist als eine umlaufend geschlossene 90°-Umkantung an dem Außenumfang U des Türelements 5 ausgebildet. Das Türelement 5 ist insbesondere ein gekantetes Flachteil, das eine Türseite aufweist, die sich in der Schließstellung (vgl. Figur 6) des Türelements 5 parallel zu der Türöffnung 4 erstreckt und diese bedeckt, und die die umlaufende 90°-Umkantung aufweist. Die zweite Scharnierhälfte 3 lagert mit einer ersten Stützfläche 13 an der Türseite 12 und mit einer zweiten Stützfläche 14 an der 90°-Umkantung.

In Figur 6 ist zu erkennen, wie in der Schließstellung die Dichtseite 16 in das Dichtelement eindringt, das heißt dieses komprimiert, um so eine dichtende Verbindung zwischen dem Schaltschrankgehäuse und dem Türelement herzustellen.

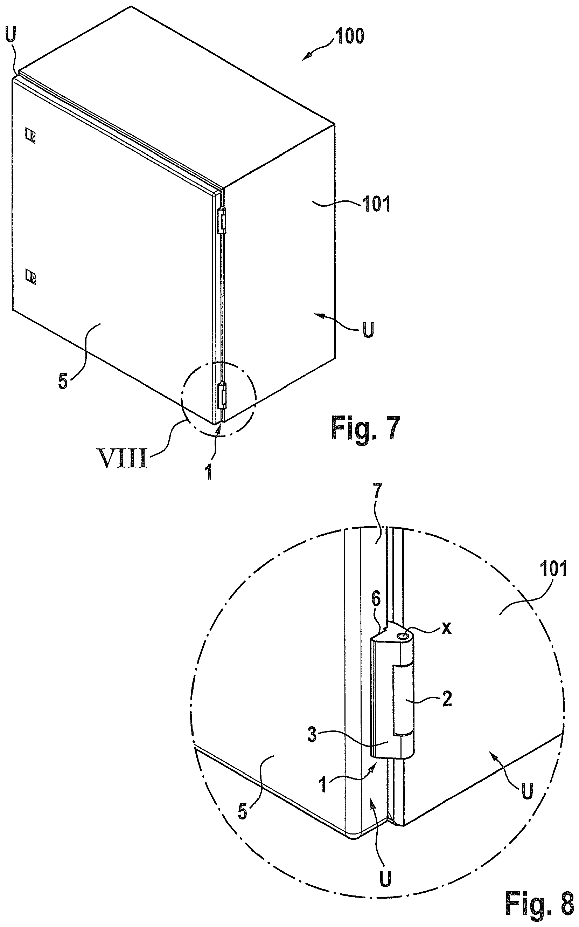

Die Figuren 7 und 8 veranschaulichen, dass die Drehachse x der Scharnieranordnungen 1 außerhalb sowohl des Außenumfangs U des Schaltschrankgehäuses 100 als auch des Türelements 5 angeordnet ist, wodurch die 180°-Verschwenkbarkeit des Türelements 5 gegenüber dem Gehäuse 100 ermöglicht wird.

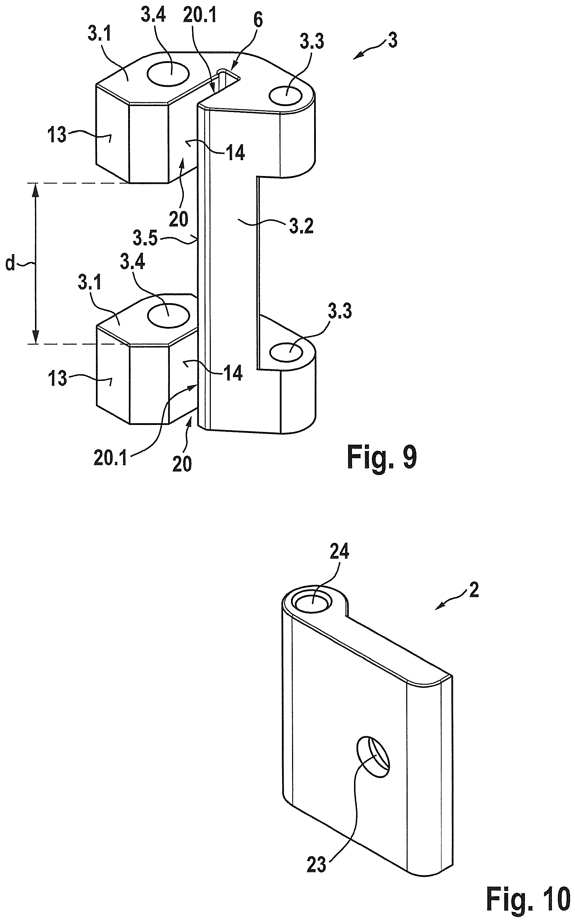

Eine beispielhafte Ausführungsform der ersten und der zweiten Scharnierhälfte ist in den Figuren 9 und 10 gezeigt. Die zweite Scharnierhälfte 3 gemäß Figur 9 weist zwei um einen Abstand d zueinander beabstandete Lagerteile 3.1 auf, mit jeweils einer ersten Durchgangsbohrung 3.3 zur Aufnahme der Drehachse x und einer sich dazu parallel erstreckenden zweiten Durchgangsbohrung 3.4 zur Aufnahme des Verbindungsbolzens 11. Die Lagerteile 3.1 weisen weiterhin sich ebenfalls parallel zu den ersten und zweiten Durchgangsbohrungen 3.3, 3.4 erstreckende Teilnuten 20 auf. Die beiden Lagerteile 3.1 sind über einen Verbindungssteg 3.2, um einen Abstand d zueinander und mit sowohl fluchtenden ersten und zweiten Durchgangsbohrungen 3.3 als auch fluchtenden Teilnuten 20 miteinander verbunden.

Es ist weiterhin zu erkennen, dass der Verbindungssteg 3.2 eine Anlageseite 3.5 aufweist, die mit jeweils einer Begrenzungsseite 20.1 der beiden Teilnuten 20 fluchtet, so dass die Anlageseite 3.5 des Verbindungssteges 3.2 mit den Begrenzungsseiten 20.1 der Teilnuten 20 eine in Drehachsenrichtung ebene und durchgehend einteilige Nutbegrenzungswand der Nut 6 der zweiten Scharnierhälfte 3 bildet. Weiterhin ist die Nut 6 der zweiten Scharnierhälfte 3 an ihrer der durchgehend einteiligen Nutbegrenzungswand gegenüberliegenden Seite im Bereich zwischen den beiden Lagerteilen 3.1 unterbrochen.

Die in Figur 10 gezeigte erste Scharnierhälfte 2 kann einen zu den Durchgangsbohrungen 3.3 korrespondierenden Drehachsendurchgang 24 aufweisen. Die erste Scharnierhälfte 2 ist somit im Wesentlichen formschlüssig zwischen den beiden Durchgangsbohrungen 3.3 der zweiten Scharnierhälfte 3 derart aufnehmbar, dass die Durchgangsbohrung 3.3 und der Drehachsendurchgang 24 fluchten, so dass eine Drehachse, beispielsweise in Form eines Metallstifts durch die fluchtenden Öffnungen 3.3, 24 hindurchgeführt werden kann und somit die Scharnierhälften 2, 3 zueinander verschwenkbar miteinander verbunden werden.

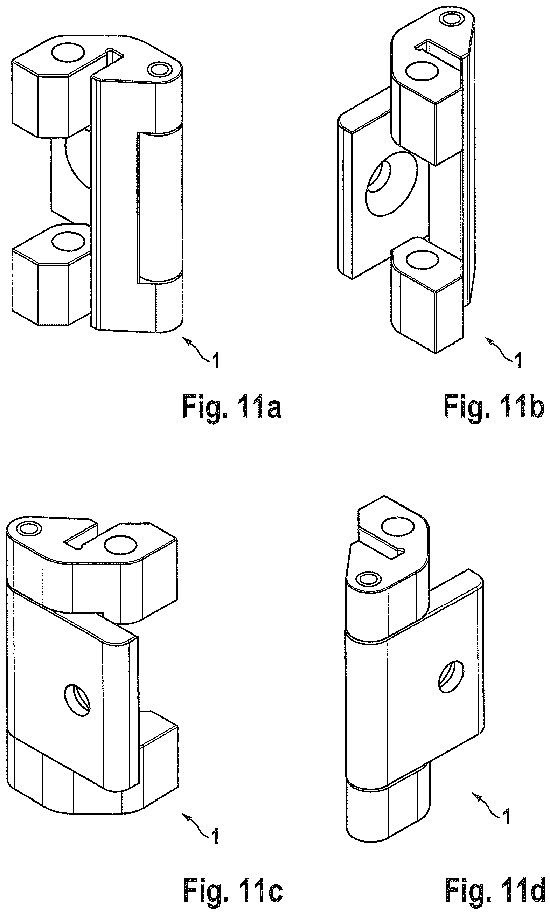

Die derart miteinander verbundenen Scharnierhälften 2, 3 bilden eine Scharnieranordnung 1, wie sie in verschiedenen perspektivischen Ansichten in den Figuren 11a-11d dargestellt sind.

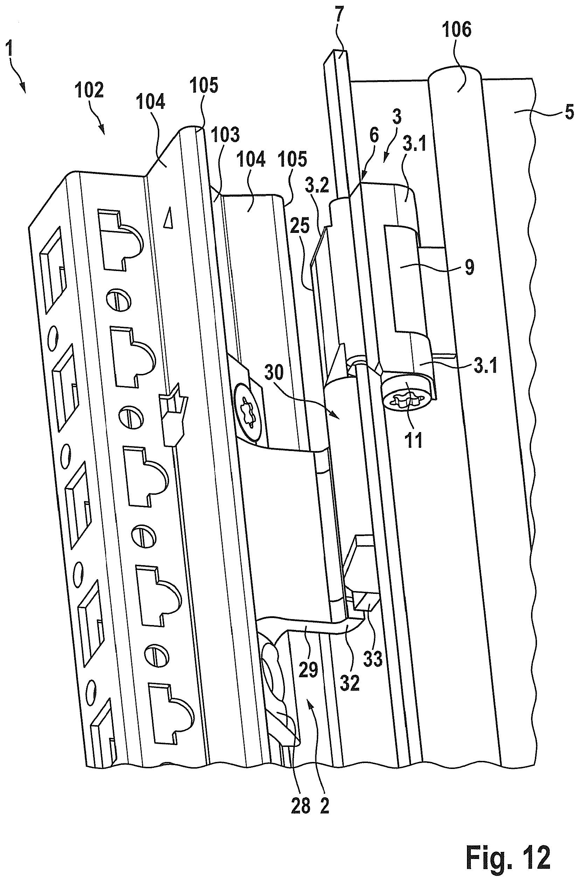

Die Figur 12 zeigt eine Scharnieranordnung 1, bei der ein Türelement 5 über ein aus einer ersten Scharnierhälfte 2 und einer zweiten Scharnierhälfte 3 gebildetes Scharnier verschwenkbar an einem Vertikalprofil 102 eines Schaltschrankgehäuses festgelegt ist. Das Vertikalprofil 102 kann Bestandteil eines Rahmengestells eines Schaltschrankgehäuses sein. Das Vertikalprofil 102 kann eine Querschnittsgeometrie aufweisen, wie sie aus der DE 10 2014 101 404 A1 bekannt ist.

Das Vertikalprofil 102 weist zwei im Wesentlichen senkrecht zueinander ausgerichtete Dichtstege 104 auf, die in zwei senkrecht zueinanderstehenden Ebenen Dichtebenen über ihre freien Dichtkanten 105 bilden, entlang welcher die Dichtstege 104 dichtend an einem Dichtelement 106 zur Anlage gebracht werden können. In der Darstellung gemäß Figur 8 weist das Türelement 5 an seiner Innenseite ein Dichtelement 106 auf, welches in der Schließstellung der Scharnieranordnung an der Dichtkante 105 des in der Darstellung vorderen Dichtstegs 104 zur Anlage kommt.

Zurückversetzt zu den freien Dichtkanten 105 sind die Dichtstege 104 über eine Verbindungsprofilseite 103 miteinander verbunden. Die Verbindungsprofilseite 103 erstreckt sich im Wesentlichen unter einem Winkel von 45° zu den beiden Dichtstegen 104. An der Verbindungsprofilseite 103 ist die erste Scharnierhälfte 2 über einen Befestigungsflansch 28 festgelegt. An den Befestigungsflansch 28 ist ein L-förmiger Ansatz angeformt, bestehend aus einem ersten Profilsteg 29, der sich unter einem Winkel von 45° zu dem Befestigungsflansch 28 erstreckt, und einem sich dazu unter einem 90°-Winkel erstreckenden zweiten Profilsteg 33. Der erste Profilsteg 29 und der zweite Profilsteg 33 sind über einen 90°-Übergang miteinander verbunden. An dem von dem Befestigungsflansch 28 abgewandten Ende des zweiten Profilstegs 33 ist an diesen ein Scharnierbolzensitz 30 angeformt, in welchem ein Scharnierbolzen beispielsweise im Presssitz aufgenommen sein kann, wobei der Scharnierbolzen mit einem freien Ende aus dem in der Darstellung gemäß Figur 12 oberen Ende des Scharnierbolzensitzes 30 herausragt und sich in eine Scharnierbolzenhülse 25 der zweiten Scharnierhälfte 3 hineinerstreckt, so dass die beiden Scharnierhälften 2, 3 zueinander verschwenkbar aneinander festgelegt sind.

Das Türelement 5 weist an seiner Innenseite ein Befestigungsmittel 9 auf, das in Form einer aufgeschweißten Blechlasche ausgebildet sei kann und über welche mit Hilfe eines Verbindungsbolzens 11 die zweite Scharnierhälfte 3 über ihre beiden Lagerteile 3.1. festgelegt ist. Die zweite Scharnierhälfte 3 weist wiederum eine Nut 6 auf, über welche sie auf einen Vorsprung 7 am Außenumfang des Türelementes 5 aufgesteckt ist. Der Vorsprung 7 ist dabei als eine äußere 90°-Umkantung des Türelements 5 ausgebildet, wobei der Vorsprung 7 an der Innenseite des Türelements 5 vorspringt.

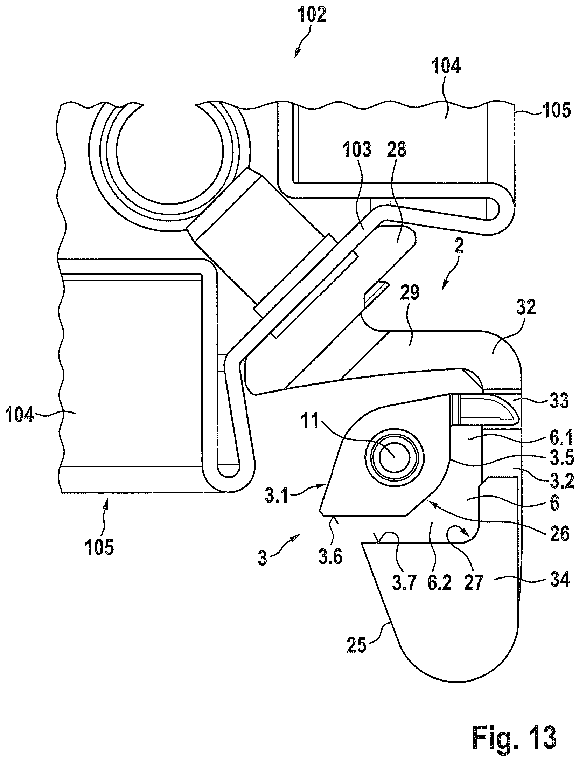

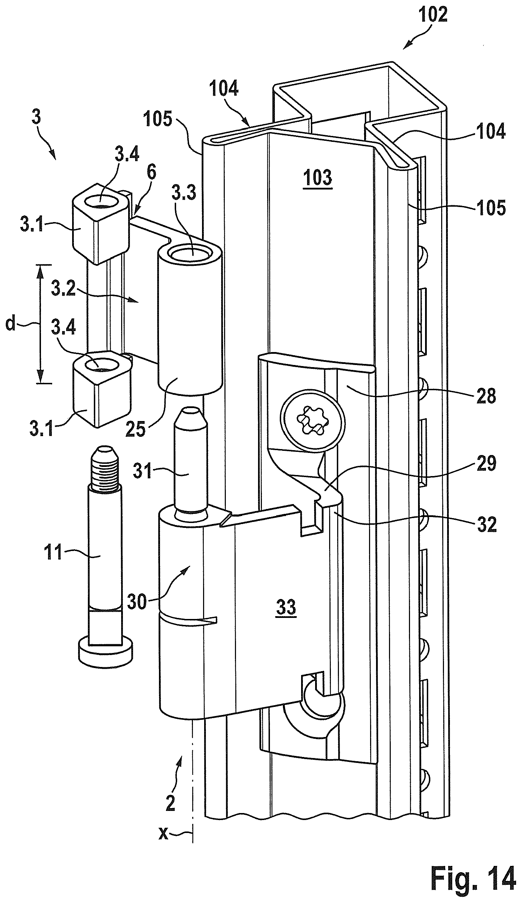

In der Zusammenschau der Figuren 13 und 14 sind weitere Einzelheiten der in Figur 12 gezeigten Ausführungsform einer Scharnieranordnung dargestellt, wobei zur besseren Veranschaulichung das Türelement 5 entfernt wurde. Demgemäß weist die zweite Scharnierhälfte 3 zwei Lagerteile 3.1 mit jeweils einer ersten Durchgangsbohrung 3.3 zur Aufnahme eines Verbindungsbolzens 11 auf. Mindestens eine der Durchgangsbohrungen 3.3 kann als Gewindebohrung ausgebildet sein, wenn, wie in Figur 10 dargestellt ist, beispielsweise das Einsteckende des Verbindungsbolzens 11 ein Außengewinde aufweist. Die zweite Scharnierhälfte 3 weist weiterhin eine sich zu den Durchgangsbohrungen 3.3 parallel erstreckende Scharnierbolzenhülse 25 zur Aufnahme der Drehachse x auf. Die Drehachse x ist von einem Scharnierbolzen 31 gebildet, der in einem Scharnierbolzensitz 30 der ersten Scharnierhälfte 2 im Presssitz aufgenommen ist.

Die beiden Lagerteile 3.1 sind über einen Verbindungssteg 3.2 unter einem Abstand d zueinander mit fluchtenden ersten Durchgangsbohrungen 3.3 und mit der Scharnierbolzenhülse 25 verbunden. Zwischen den Lagerteilen 3.1 und dem Verbindungssteg 3.2 ist die Nut 6 ausgebildet.

Die Nut 6 ist im Wesentlichen L-förmig ausgebildet und weist einen Nutabschnitt 6.1 zwischen dem Verbindungssteg 3.2 und einer jeweiligen ersten Anlageseite 3.5 der Lagerteile 3.1 auf, sowie einen zweiten Nutabschnitt 6.2, der zwischen der Scharnierbolzenhülse 25 und einer jeweiligen zweiten Anlageseite 3.6 der Lagerteile 3.1 gebildet ist. Je Lagerteil 3.1 sind die erste und die zweite Anlageseite 3.5, 3.6 senkrecht zueinander ausgerichtet und gehen über einen ersten Rundabschnitt 26 ineinander über.

Der Verbindungssteg 3.2 erstreckt sich senkrecht zu einer weiteren Anlageseite 3.7 der Scharnierbolzenhülse 25, wobei die weitere Anlageseite 3.7 parallel beabstandet zu den zweiten Anlageseiten 3.6 angeordnet ist, so dass der zweite Nutabschnitt 6.2 gebildet ist. Der Verbindungssteg 3.2 geht über einen zweiten Rundabschnitt 27 in die weitere Anlageseite 3.7 über. Der Radius des ersten Rundabschnitts 26 ist größer als der Radius des zweiten Rundabschnitts 27 ausgebildet.

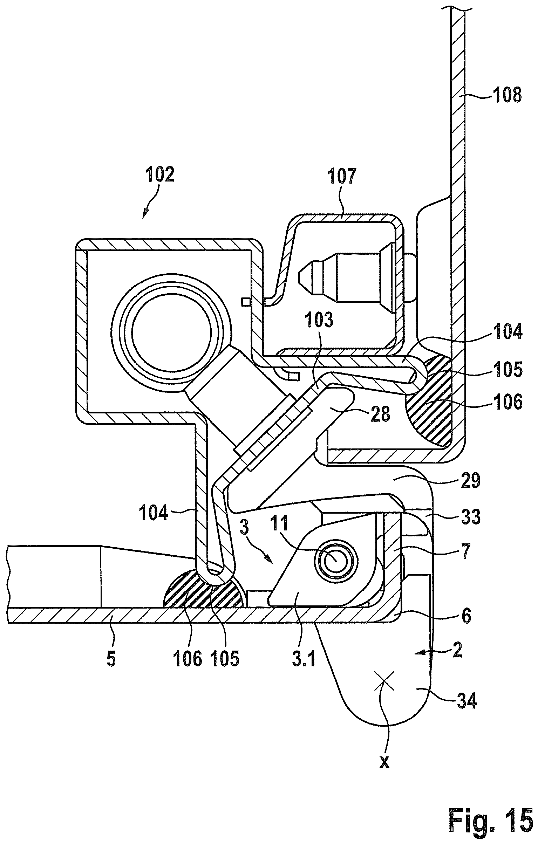

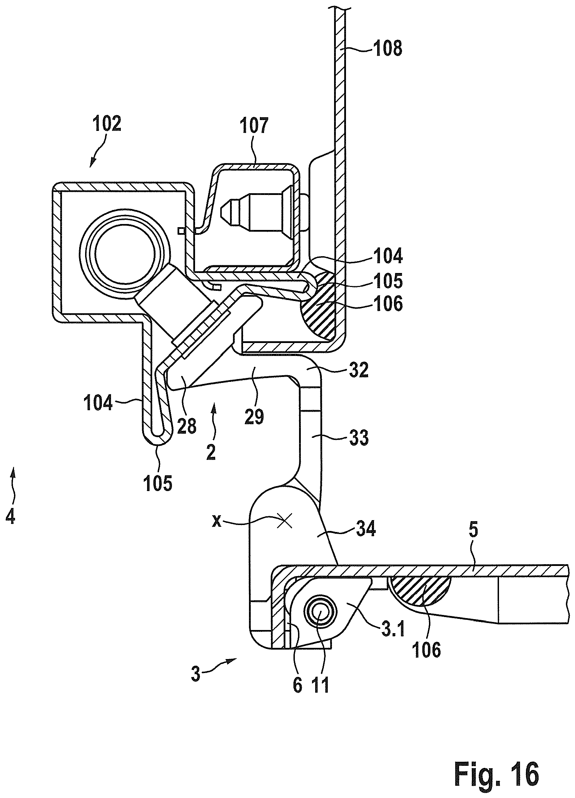

Die Figuren 15 und 16 zeigen eine Ausführungsform der erfindungsgemäßen Scharnieranordnung einmal in der Schließstellung (Figur 15) und einmal in der Offenstellung (Figur 16), wobei das Türelement 5 zwischen der Offenstellung und der Schließstellung um 180° um die Drehachse x verschwenkbar ist.

Die Anordnung gemäß den Figuren 15 und 16 weist neben dem aus den Scharnierhälften 2, 3 gebildeten Scharnier, welches an einem Vertikalprofil 102 eines Rahmengestells eines Schaltschranks festgelegt ist, weiterhin ein Flachteil 108 auf, welches über einen Flachteilhalter 107 an demselben Vertikalprofil 102 festgelegt ist. In der Schließstellung des Türelements 5 ist das Flachteil 108 in einer zur Türebene um 90° versetzten Ebene festgelegt. In der Schließstellung sind durch die als Dichtkanten 105 ausgebildeten freien Enden der Dichtstege 104, die sich entsprechend im Wesentlichen senkrecht zueinander erstrecken, Dichtebenen gebildet, über welche zum einen das Flachteil 108 und zum anderen das Türelement 5 gegenüber dem Vertikalprofil 102 abgedichtet ist.

Die Figur 12 lässt weiterhin erkennen, dass in der dargestellten Offenposition das Türelement 5 vollständig aus dem lichten Maß der Türöffnung 4 herausgeschwenkt ist. Die erste Scharnierhälfte 2 erstreckt sich in der Schließstellung des Türelements 5 zwischen einer Außenkante des Vorsprungs 7 und einer Umkantung des Flachteils 108, wobei die zweite Scharnierhälfte in der Schließstellung vollständig in einer zwischen dem türseitigen Dichtsteg 104, dem ersten Profilsteg 29, dem sich zu dem ersten Profilsteg 29 senkrecht erstreckenden zweiten Profilsteg 33 und dem Türelement 5 gebildeten Aufnahme aufgenommen ist, so dass in der Schließstellung die zweite Scharnierhälfte 3 vollständig bedeckt und damit von außen nicht sichtbar beziehungsweise vor jeglicher mechanischer Beanspruchung gesichert ist.

### Bezugszeichenliste

- 1: Scharnieranordnung
- 2.: erste Scharnierhälfte
- 3: zweite Scharnierhälfte
- 3.1: Lagerteil
- 3.2: Verbindungssteg
- 3.3: erste Durchgangsbohrung (Gewindebohrung)
- 3.4: zweite Durchgangsbohrung
- 3.5: erste Anlageseite
- 3.6: zweite Anlageseite
- 3.7: weitere Anlageseite
- 4: Türöffnung
- 5: Türelement
- 6: Nut
- 6.1: Nutabschnitt
- 6.2: zweiter Nutabschnitt
- 7: Vorsprung
- 8: Innenseite
- 9: Befestigungsmittel
- 10: weiteres Befestigungsmittel
- 11: Verbindungsbolzen
- 12: Türseite
- 13: erste Stützfläche
- 14: zweite Stützfläche
- 15: U-Profil
- 16: parallele Profilseite
- 17: weitere Profilseite
- 18: 90°-Umkantung
- 19: Dichtelement
- 20: Teilnut
- 20.1: Begrenzungsseite
- 21: Schrankverbindung
- 22: Türrohrrahmen
- 23: Befestigungsdurchlass
- 24: Drehachsendurchgang
- 25: Scharnierbolzenhülse
- 26: erster Randabschnitt
- 27: zweiter Randabschnitt
- 28: Befestigungsflansch
- 29: erster Profilsteg
- 30: Scharnierbolzensitz
- 31: Scharnierbolzen
- 32: 90°-Übergang
- 33: zweiter Profilsteg
- 34: Abdeckung
- 100: Schaltschrankgehäuse
- 101: Seitenwand
- 102: Vertikalprofil
- 103: Verbindungsprofilseite
- 104: Dichtsteg
- 105: Dichtkante
- 106: Dichtelement
- 107: Flachteilhalter
- 108: Flachteil
- d: Abstand
- U: Außenumfang
- x: Drehachse

## Patentansprüche

1. Schaltschrankgehäuse (100), das eine Seitenwand (101) oder ein Vertikalprofil (102) und ein Türelement (5) aufweist, das an der Seitenwand (101) oder an dem Vertikalprofil (102) über mindestens eine Scharnieranordnung (1) befestigt ist, wobei die Scharnieranordnung (1) eine erste Scharnierhälfte (2), die an der eine Türöffnung (4) begrenzenden vertikalen Seitenwand (101) oder dem Vertikalprofil (102) des Schaltschrankgehäuses (100) befestigt ist, und eine zweite Scharnierhälfte (3) aufweist, die an dem Türelement (5) befestigt ist, wobei die Scharnierhälften (2, 3) über eine Drehachse (x) zueinander verschwenkbar miteinander verbunden sind, so dass in einer Schließstellung das Türelement (5) die Türöffnung (4) verschließt und in einer Offenstellung vorzugsweise vollständig freigibt, und wobei die Drehachse (x) außerhalb eines Außenumfangs (U) sowohl der Türöffnung (4) als auch des Türelements (5) angeordnet ist, wobei mindestens die zweite Scharnierhälfte (3) eine Nut (6) aufweist, über die die Scharnierhälfte (2, 3) auf einen Vorsprung (7) an dem Außenumfang (U) des der Scharnierhälfte (2, 3) zugeordneten Teils von Schaltschrankgehäuse (100) und Türelement (5) aufgesteckt ist, wobei die zweite Scharnierhälfte (3) über den Vorsprung (7) am Außenumfang (U) des Türelements (5) aufgeclipst und über einen Verbindungsbolzen (11) an dem Türelement arretiert ist, sowie zwei Lagerteile (3.1) mit jeweils einer ersten Durchgangsbohrung (3.4) zur Aufnahme des Verbindungsbolzens (11) und weiterhin eine sich zu den Durchgangsbohrungen (3.4) parallel erstreckende Scharnierbolzenhülse (25) zur Aufnahme der Drehachse (x) aufweist, wobei die beiden Lagerteile (3.1) über einen Verbindungssteg (3.2) unter einem Abstand (d) zueinander mit fluchtenden ersten Durchgangsbohrungen (3.4) und mit der Scharnierbolzenhülse (25) verbunden sind, und wobei zwischen den Lagerteilen (3.1) und dem Verbindungssteg (3.2) die Nut (6) ausgebildet ist, **dadurch gekennzeichnet, dass** der Verbindungsbolzen (11) durch ein türelementseitiges Befestigungsmittel (9), das eine am Außenumfang (U) des Türelements (5) aufgeschweißte Öse ist, hindurchgeführt ist, und dass die Nut (6) L-förmig ausgebildet ist, mit einem ersten Nutabschnitt (6.1) zwischen dem Verbindungssteg (3.2) und einer jeweiligen ersten Anlageseite (3.5) der Lagerteile (3.1) und mit einem zweiten Nutabschnitt (6.2) zwischen der Scharnierbolzenhülse (25) und einer jeweiligen zweiten Anlageseite (3.6) der Lagerteile (3.1).

2. Schaltschrankgehäuse (100) nach Anspruch 1, bei der sich der Vorsprung (7) parallel zu der Drehachse (x) und, zumindest dann, wenn das Türelement (5) die Türöffnung (4) verschließt, senkrecht zu der Türöffnung (4) erstreckt.

3. Schaltschrankgehäuse (100) nach Anspruch 1 oder 2, bei der der Vorsprung (7) eine, gegebenenfalls umlaufend geschlossene, 90°-Umkantung an dem Außenumfang (U) des Türelements (5) ist.

4. Schaltschrankgehäuse (100) nach Anspruch 1, bei der je Lagerteil (3.1) die erste und die zweite Anlageseite (3.5, 3.6) senkrecht zueinander ausgerichtet sind und über einen ersten Rundabschnitt (26) ineinander übergehen.

5. Schaltschrankgehäuse (100) nach Anspruch 4, bei der sich der Verbindungssteg (3.2) senkrecht zu einer weiteren Anlageseite (3.7) der Scharnierbolzenhülse (25) erstreckt, wobei die weitere Anlageseite (3.7) parallel beabstandet zu den zweiten Anlageseiten (3.6) angeordnet ist, sodass der zweite Nutabschnitt (6.2) gebildet ist, wobei der Verbindungssteg (3.2) über einen zweiten Rundabschnitt (27) in die weitere Anlageseite (3.7) übergeht, wobei der Radius des ersten Rundabschnitts (26) größer als der Radius des zweiten Rundabschnitts (27) ist.

6. Schaltschrankgehäuse (100) nach Anspruch 1, die weiterhin ein Vertikalprofil (102) eines Rahmengestells eines Schaltschrankgehäuses aufweist, wobei das Vertikalprofil (102) im Querschnitt zwei senkrecht zueinander ausgerichtete Dichtstege (104) aufweist, die über eine gegenüber Dichtkanten der beiden Dichtstege (104) zurückversetzte Verbindungsprofilseite (103) miteinander verbunden sind, wobei die erste Scharnierhälfte (2) über die Verbindungsprofilseite (103) an dem Vertikalprofil (102) festgelegt ist.

7. Schaltschrankgehäuse (100) nach Anspruch 6, bei der die erste Scharnierhälfte (2) über einen Befestigungsflansch (28) an der Verbindungsprofilseite (103) festgelegt ist, an den ein L-förmiger Profilsabschnitt mit einem ersten Profilsteg (29) unter einem 45°-Winkel angeformt ist, wobei der erste Profilsteg (29) über einen 90°-Übergang (32) in einen zweiten Profilsteg (33) übergeht, an dessen freiem Ende ein Scharnierbolzensitz (30) in der Drehachse (x) angeordnet ist.

## Claims

1. A switchgear cabinet housing (100), which has a side wall (101) or a vertical profile (102) and a door element (5), which is attached to the side wall (101) or to the vertical profile (102) via at least one hinge arrangement (1), wherein the hinge arrangement (1) has a first hinge half (2), which is attached to the vertical side wall (101) delimiting a door opening (4) or to the vertical profile (102) of the switchgear cabinet housing (100), and a second hinge half (3), which is attached to the door element (5), wherein the hinge halves (2, 3) are connected to one another so as to be pivotable with respect to one another via an axis of rotation (x), such that, in a closed position, the door element (5) closes the door opening (4) and, in an open position, preferably completely releases it, and wherein the axis of rotation (x) is arranged outside an outer circumference (U) both of the door opening (4) and of the door element (5), wherein at least the second hinge half (2, 3) has a groove (6), via which the hinge half (2, 3) is plugged onto a projection (7) on the outer circumference (U) of that part of the switchgear cabinet housing (100) and door element (5) which is assigned to the hinge half (2, 3), wherein the second hinge half (3) is clipped onto the outer circumference (U) of the door element (5) via the projection (7) and is locked on the door element via a connecting bolt (11), and also has two bearing parts (3.1), each with a first through-hole (3.4) for receiving the connecting bolt (11), and furthermore a hinge bolt sleeve (25), which extends parallel to the through-holes (3.4), for receiving the axis of rotation (x), wherein the two bearing parts (3.1) are connected via a connecting web (3.2) at a distance (d) from one another to aligned first through-holes (3.4) and to the hinge bolt sleeve (25), and wherein the groove (6) is formed between the bearing parts (3.1) and the connecting web (3.2), **characterised in that** the connecting bolt (11) is guided through a fastening means (9) on the door element side, which is an eye welded onto the outer circumference (U) of the door element (5), and **in that** the groove (6) is L-shaped, with a first groove section (6.1) between the connecting web (3.2) and a respective first bearing side (3.5) of the bearing parts (3.1) and with a second groove section (6.2) between the hinge bolt sleeve (25) and a respective second bearing side (3.6) of the bearing parts (3.1).

2. The switchgear cabinet housing (100) according to claim 1, in which the projection (7) extends parallel to the axis of rotation (x) and, at least when the door element (5) closes the door opening (4), perpendicular to the door opening (4).

3. The switchgear cabinet housing (100) according to claim 1 or 2, in which the projection (7) is an optionally circumferentially closed 90° edge on the outer circumference (U) of the door element (5).

4. The switchgear cabinet housing (100) according to claim 1, in which for each bearing part (3.1) the first and the second contact side (3.5, 3.6) are aligned perpendicular to each other and merge into each other via a first round section (26).

5. The switchgear cabinet housing (100) according to claim 4, in which the connecting web (3.2) extends perpendicular to a further contact side (3.7) of the hinge bolt sleeve (25), wherein the further contact side (3.7) is arranged spaced apart parallel to the second contact sides (3.6) so that the second groove section (6.2) is formed, wherein the connecting web (3.2) merges into the further contact side (3.7) via a second round section (27), wherein the radius of the first round section (26) is greater than the radius of the second round section (27).

6. The switchgear cabinet housing (100) according to claim 1, which further comprises a vertical profile (102) of a frame of a switchgear cabinet housing, wherein the vertical profile (102) has in cross-section two sealing webs (104) aligned perpendicular to each other, which are connected to each other via a connecting profile side (103) set back with respect to sealing edges of the two sealing webs (104), wherein the first hinge half (2) is fixed to the vertical profile (102) via the connecting profile side (103).

7. The switchgear cabinet housing (100) according to claim 6, in which the first hinge half (2) is fixed to the connecting profile side (103) via a fastening flange (28), to which an L-shaped profile section with a first profile web (29) is formed at a 45° angle, wherein the first profile web (29) merges via a 90° transition (32) into a second profile web (33), at the free end of which a hinge bolt seat (30) is arranged in the axis of rotation (x).

## Revendications

1. Boîtier d'armoire de commande (100) qui comprend une paroi latérale (101) ou un profilé vertical (102) et un élément de porte (5), qui est fixé à la paroi latérale (101) ou au profilé vertical (102) par l'intermédiaire d'au moins un dispositif de charnière (1), dans lequel le dispositif de charnière (1) comprend une première moitié de charnière (2), qui est fixée à la paroi latérale verticale (101) délimitant une ouverture de porte (4) ou au profilé vertical (102) du boîtier d'armoire de commande (100) et une deuxième moitié de charnière (3) qui est fixée à l'élément de porte (5), dans lequel les moitiés de charnière (2, 3) sont reliées entre elles de manière pivotante par l'intermédiaire d'un axe de rotation (x), de sorte que, dans une position de fermeture, l'élément de porte (5) ferme l'ouverture de porte (4) et, dans une position d'ouverture, la libère de préférence entièrement, et dans lequel l'axe de rotation (x) est disposé hors d'une périphérie externe (U) aussi bien de l'ouverture de porte (4) que de l'élément de porte (5), dans lequel au moins la deuxième moitié de charnière (3) présente une rainure (6) par l'intermédiaire de laquelle la moitié de charnière (2, 3) est enfichée sur une saillie (7) sur la périphérie externe (U) de la partie, correspondant à la moitié de charnière (2, 3), du boîtier d'armoire de commande (100) et de l'élément de porte (5), dans lequel la deuxième moitié de charnière (3) est clipsée, par l'intermédiaire de la saillie (7), à la périphérie externe (U) de l'élément de porte (5) et est bloquée, par l'intermédiaire d'une tige de liaison (11), sur l'élément de porte, ainsi que deux parties de palier (3.1), chacune avec un premier alésage de passage (3.4) pour le logement de la tige de liaison (11) et, en outre, un manchon de tige de charnière (25), s'étendant parallèle aux alésages de passage (3.4), pour le logement de l'axe de rotation (x), dans lequel les deux parties de palier (3.1) sont reliées, par l'intermédiaire d'une nervure de liaison (3.2) avec une certaine distance entre elles, avec les premiers alésages de passage (3.4) alignés et avec le manchon de tige de charnière (25), et dans lequel la rainure (6) est réalisée entre les parties de palier (3.1) et la nervure de liaison (3.2), **caractérisé en ce que** la tige de liaison (11) est guidée à travers un moyen de fixation côté élément de porte (9), qui est un oeillet soudé sur la périphérie externe (U) de l'élément de porte (5) et **en ce que** la rainure (6) présente une forme de L, avec une première portion de rainure (6.1) entre la nervure de liaison (3.2) et un premier côté d'appui (3.5) respectif des parties de palier (3.1) et avec une deuxième portion de rainure (6.2) entre le manchon de tige de charnière (25) et un deuxième côté d'appui (3.6) respectif des parties de palier (3.1).

2. Boîtier d'armoire de commande (100) selon la revendication 1, dans lequel la saillie (7) s'étend parallèlement à l'axe de rotation (x) et perpendiculairement à l'ouverture de porte (4), au moins lorsque l'élément de porte (5) ferme l'ouverture de porte (4).

3. Boîtier d'armoire de commande (100) selon la revendication 1 ou 2, dans lequel la saillie (7) est un pliage à 90°, le cas échéant fermé sur la périphérie, sur la périphérie externe (U) de l'élément de porte (5).

4. Boîtier d'armoire de commande (100) selon la revendication 1, dans lequel, sur chaque partie de palier (3.1), les premier et deuxième côtés d'appui (3.5, 3.6) sont orientés perpendiculairement entre eux et se transforment l'un dans l'autre par l'intermédiaire d'une première portion ronde (26).

5. Boîtier d'armoire de commande (100) selon la revendication 4, dans lequel la nervure de liaison (3.2) s'étend perpendiculairement à un autre côté d'appui (3.7) du manchon de tige de charnière (25), dans lequel l'autre côté d'appui (3.7) est disposé parallèlement à distance des deuxièmes côtés d'appui (3.6), de sorte que la deuxième portion de rainure (6.2) est formée, dans lequel la nervure de liaison (3.2) se transforme dans l'autre côté d'appui (3.7) par l'intermédiaire d'une deuxième portion ronde (27), dans lequel le rayon de la première portion ronde (26) est supérieur au rayon de la deuxième portion ronde (27).

6. Boîtier d'armoire de commande (100) selon la revendication 1, qui comprend en outre un profilé vertical (102) d'un châssis d'un boîtier d'armoire de commande, dans lequel le profilé vertical (102) comprend, en coupe transversale, deux nervures d'étanchéité (104) orientées perpendiculairement entre elles, qui sont reliées entre elles par l'intermédiaire d'un côté de profilé de liaison (103) en retrait par rapport à des arêtes d'étanchéité des deux nervures d'étanchéité (104), dans lequel la première moitié de charnière (2) est fixée au profilé vertical (102) par l'intermédiaire du côté de profilé de liaison (103).

7. Boîtier d'armoire de commande (100) selon la revendication 6, dans lequel la première moitié de charnière (2) est fixée au côté de profilé de liaison (103) par l'intermédiaire d'une bride de fixation (28), sur laquelle est formée une portion de profilé en forme de L avec une première nervure de profilé (29) avec un angle de 45°, dans lequel la première nervure de profilé (29) se transforme, par l'intermédiaire d'une transition à 90° (32), en une deuxième nervure de profilé (33), sur l'extrémité libre de laquelle est disposé un siège de tige de charnière (30) dans l'axe de rotation (x).
